## Europäisches Patentamt

## European Patent Office

## Office européen des brevets

(19)

(11) Veröffentlichungsnummer: **0 216 097**

**A1**

(12) # EUROPÄISCHE PATENTANMELDUNG

(21) Anmeldenummer: 86110962.7

(22) Anmeldetag: 08.08.86

(51) Int. Cl.⁴: **A01N 63/04**

(30) Priorität: 24.08.85 DE 3530340

(43) Veröffentlichungstag der Anmeldung:
01.04.87 Patentblatt 87/14

(84) Benannte Vertragsstaaten:
**AT BE CH DE FR GB IT LI NL SE**

(71) Anmelder: **Prillwitz, Hans-Georg Dr.**
**Rilkeallee 9**
**D-6500 Mainz 31(DE)**
Anmelder: **Schreiber, Maria-Teresa, Dr.**
**Thüringer Weg 30**
**D-6238 Hofheim am Taunus(DE)**

(72) Erfinder: **Prillwitz, Hans-Georg Dr.**
**Rilkeallee 9**
**D-6500 Mainz 31(DE)**
Erfinder: **Schreiber, Maria-Teresa, Dr.**
**Thüringer Weg 30**
**D-6238 Hofheim am Taunus(DE)**

(74) Vertreter: **Tergau, Ulrich, Dr. et al**
**HOECHST AKTIENGESELLSCHAFT** Zentrale
**Patentabteilung Postfach 80 03 20**
**D-6230 Frankfurt am Main 80(DE)**

(54) Verfahren zur Bekämpfung von Schadpilzen im Getreide.

(57) Gegenstand der Erfindung ist ein Verfahren zur Bekämpfung der Halmbruchkrankheit bei Getreidepflanzen, wobei der Pilz Pseudocercosporella anguioides oder Pseudococosporella aestiva auf die Getreidepflanzen, deren Samen oder Anbaufläche appliziert wird.

EP 0 216 097 A1

## Verfahren zur Bekämpfung von Schadpilzen im Getreide

Ein besonderes Problem beim Getreideanbau stellt die sogenannte Halmbruchkrankheit dar, welche durch bestimmte Pilze der Gattung Pseudocercosporella hervorgerufen wird. Bei Vorliegen dieser Pilzerkrankung werden Zerstörungen der Nährstoffleitgefäße des Getreidehalms beobachtet. Dies kann im Extremfall zu einer Vermorschung der Halmbasis führen. Daraus resultiert meist frühzeitiges Lagern des Getreides. Erhebliche Ertragseinbußen können dann die Folge sein.

Die häufige Anwendung von chemischen Mitteln zur Bekämpfung der Halmbruchkrankheit kann zu Resistenzproblemen führen. Es können sich Pilzstämme der Gattung Pseudocercosporella bilden, welche gegen den Einsatz von solchen Fungiziden unempfindlich sind.

Überraschenderweise wurde gefunden, daß die Pilzarten Pseudocercosporella anguioides und P. aestiva zur Bekämpfung des Halmbrucherregers P. herpotrichoides vorteilhaft geeignet ist.

P. anguioides und P. aestiva sind bekannte, natürlich vorkommende Pilzarten. Sie sind unter der Nummer CBS 496.80 (P anguioides) und CBS 497.80 (P. aestiva) beim Centralbureau voor Schimmelcultures (CBS), Oosterstraat, Baarn/Holland hinterlegt. Beide Pilzarten können jedoch unabhängig von ihrer Herkunft verwendet werden, d.h. die Varianten und Mutanten bzw. alle natürlich vorkommenden Stämme sind erfindungsgemäß einsetzbar. Die Isolierung der natürlichen Stämme erfolgt nach dem Fachmann bekannten Methoden.

Gegenstand der vorliegenden Erfindung ist daher ein Verfahren zur Bekämpfung der Halmbruchkrankheit bei Getreidepflanzen, dadurch gekennzeichnet, daß man die Pilzarten Pseudocercosporella anguioides oder Pseudocercosporella aestiva auf die Getreidepflanzen appliziert. Bevorzugt wird P. anguioides eingesetzt.

P. anguioides und P. aestiva sind keine Pathogene des Getreidehalmes im Gegensatz zu Pseudocercosporella herpotrichoides var. herpotrichoides und Pseudocercosporella herpotrichoides var. acuformis, welche die Halmbruchkrankheit verursachen.

Im Unterschied zu diesen pathogenen Arten besiedelt P. anguioides nur die Blattscheiden, nicht jedoch den Getreidehalm, während P. aestiva auf den Blattscheiden und auf abgestorbenem Pflanzengewebe von Getreide vorkommt.

Bei Applikation von P. anguioides bzw. P. aestiva vor allem in der frühen Vegetationsphase von Getreidepflanzen läßt sich die Inokulation der Halme durch die pathogenen Pseudocercosporella-Arten überraschenderweise stark einschränken oder sogar ganz unterbinden. Bevorzugte Anwendungsgebiete liegen im Falle der Spritzapplikation im Entwickungstadium EC 10 bis EC 25 - (Einblattstadium bis Mitte Bestockung). Darüber hinaus ist eine Beiz-oder Bodenapplikation möglich.

P. anguioides bzw. P. aestiva läßt sich insbesondere bei den Getreidearten Weizen, Gerste und Roggen anwenden, bevorzugt bei Winterweizen, Wintergerste oder Winterroggen.

Die erfindungsgemäß einzusetzenden Pilzarten können als Inokulum aus Einsporkulturen gewonnen und nach H. Bockmann, Nachrichtenblatt Deutscher Planzenschutzdienst 14, (1962), S. 153-156, vermehrt werden. Sie können auch durch Kultivierung auf geeigneten Substraten wie Getreidekörnern, Stroh oder anderen Pflanzenmaterialien oder auch mit Hilfe von üblichen festen Nährmedien wie Kartoffeldextrose-Agar (PDA), Malz-oder Hefeextrakt-Agar, Wasseragar, SNA-Agar (Joffé-Medium) etc. gegebenenfalls auf geeigneten Trägermaterialien wie Glimmerschiefer ($^R$ Vermicullit) oder Kunststoffen oder auf entsprechenden flüssigen Nährmedien ohne Agarzusatz gezüchtet werden.

Gegenstand der vorliegenden Erfindung sind auch Pflanzenschutzmittel, welche P. anguioides oder P. aestiva als Mycel und/oder Sporen neben geeigneten Verdünnungsmitteln wie Wasser und/oder Hilfsmitteln enthalten. Als Hilfsmittel können übliche Zusatzstoffe wie Haftmittel oder Emulgatoren eingesetzt werden.

Die Pilze können hierbei als Mycel oder in Form von Sporen (Konidien) angewendet werden.

Die erfindungsgemäßen Mittel können als Spritzpulver, emulgierbare Konzentrate, versprühbare Lösungen, Stäubemittel, Beizmittel, Dispersionen, Granulate oder Mikrogranulate in den üblichen Zubereitungen angewendet werden.

Zur Anwendung werden die in handelsüblicher Form vorliegenden Konzentrate gegebenenfalls in üblicher Weise verdünnt, z.B. bei Spritzpulvern, emulgierbaren Konzentraten, Dispersionen und auch bei wasserdispergierbaren (Mikro-) Granulaten mittels Wasser. Staubförmige, granulierte und Beiz-Zubereitungen werden vor der Anwendung üblicherweise nicht mehr mit weiteren inerten Stoffen verdünnt. Auch Mischungen oder Mischformulierungen mit fungiziden Wirkstoffen oder nicht fungiziden Wirkstoffen wie Insektiziden, Akariziden, Herbiziden, Düngemitteln oder Wachstumsregulatoren sind gegebenenfalls möglich, wobei teilweise auch synergistische Wirkungssteigerungen erzielt werden können.

P. anguioides und P. aestiva läßt sich auch zur Bekämpfung des Halmkrankheitserregers <u>Rhizoctonia</u> spp. in den genannten Getreidearten einsetzen.

Die Aufwandmenge der erfindungsgemäß einzusetzenden Pilze kann zwischen $5 \cdot 10^4$ bis $6 \cdot 10^{15}$ kolonienbildende Einheiten pro ha, insbesondere zwischen $1 \cdot 10^9$ und $1 \cdot 10^{13}$ kolonienbildende Einheiten pro ha variieren. Als kolonienbildende Einheiten sind entweder Mycelbruchstücke, Mycelkonglomerate oder Sporen zu verstehen. Die Aufwandmenge Spritzbrühe pro ha kann hierbei zwischen 50 bis 600 l/ha variieren.

Nachstehende Beispiele dienen zur Erläuterung der Erfindung.

## Biologisches Beispiele

### A. Vorbereitung des Inokulums:

a) Das Inokulum wurde aus Einsporkulturen gewonnen und in Anlehnung an BOCKMANN - (1962) vermehrt. Hierfür wurden 2 ml Konidiensuspension in 18 ml einer 0,8 %igen Malzlösung mit Zusatz von Streptomycin (0,05 %) während 8 -10 Tagen bei 18°C in kleinen Erlenmeyerkolben bebrütet. Danach erfolgte die Beimpfung mit der frischen gewonnenen Myzelsuspension in 300 ml Erlenmeyerkolben, die bereits mit sterilisierten, feuchten, gequollenen Weizenkörnern aufgefüllt waren. Nach etwa 10 Tagen, nachdem die Körner vom Pilz überwachsen waren, wurden sie in dünnen Schichten in Pikierschalen ausgebreitet, leicht befeuchtet und zu Beginn der kühlen Jahreszeit ins Freie gestellt. Nach etwa drei Wochen, nachdem zahlreiche Konidienmengen festgestellt worden waren, wurden die Körner bei Raumtemperatur zum Trocknen ausgelegt. Für die Feldinokulation wurden die Weizenkörner kurz mit Wasser ausgewaschen. Die Sporenkonzentration wurde auf 300.000 Konidien/ml Wasser eingestellt.

b) Wie in a) beschrieben, wurde das Inokulum von P. anguioides gewonnen und nach BOCKMANN vermehrt. Danach erfolgte die Beimpfung von SNA-Agar mit Sporen oder Mycel von P. anguioides, wobei ein Gemisch aus drei verschiedenen Herkünften von P. anguioides verwendet wurde. Das beimpfte Agar wurde drei Wochen bei 15°C und Schwarzlicht (UV) bebrütet. Man - schüttelte das Agar anschließend mit einem Ultra-Turax-Rührer auf und stellte die erhaltene Sporensuspension auf $3 \cdot 10^5$ Sporen/ml ein.

### B. Feldversuche

#### Beispiel BI

Roggen, Gerste und Weizen wurden im Herbst ausgesät. Nach ca. 7 Wochen erfolgte die Inokulation mit P. anguioides, das nach Verfahren a) erhalten worden war, zwischen dem Beginn der Bestockung und Hauptbestockung (Entwicklungsstadium 21 - 25) bei einer Wasseraufwandmenge von 400 l/ha (Konzentration: $3 \cdot 10^8$ Konidien/l). Zur Zeit der Milchreife (Entwicklungsstadium 75) wurde die Schädigung der Getreidepflanzen infolge der Halmbruchkrankheit boniert.

Das Ergebnis ist in folgender Tabelle festgehalten.

## Tabelle 1

| Applikation | Dosis Sporen/ha | % Schädigung durch Halmbruchkrankheit | | |
|---|---|---|---|---|
| | | Gerste | Roggen | Weizen |
| Nicht inokulierte Kontrolle (K) | | 68 | 43 | 35 |
| mit P. anguioides | $1,2 \cdot 10^{11}$ | 12 | 9 | 12 |

#### Beispiel B2

Gerste wurde im Herbst ausgesät. 29 Tage danach erfolgte die Inokulation, wobei man das nach dem Verfahren Ab) erhaltene P. anguioides Präparat verwendete. die Dosierungen sind in Tabelle 2 angegeben. In zwei unabhängigen Versuchen wurden folgende Ergebnisse erzielt. Die Bonitierung erfolgte zur Zeit der Milchreife (gemäß Schema nach BOCKMANN).

Tabelle 2

| Applikation | Dosis Sporen/ha | % Schädigung Gerste |
|---|---|---|
| Versuch 1 | $1,2 \cdot 10^{11}$ | 8 |
| Versuch 2 | $1,2 \cdot 10^{11}$ | 11 |
| Kontrolle: Versuch 1 | - | 42 |
| Versuch 2 | - | 64 |

Wie die erhaltenen Werte aus der obigen Tabellen zeigen, wird die Schädigung der Getreidepflanzen bei Einsatz von P. anguioides deutlich herabgesetzt.

**Ansprüche**

1. Verfahren zur Bekämpfung der Halmbruchkrankheit bei Getreidepflanzen, dadurch gekennzeichnet, daß man den Pilz Pseudocercosporella anguioides oder Pseudocercosporella aestiva auf diese, deren Samen oder Anbauflächen appliziert.

2. Verfahren gemäß Anspruch I, dadurch gekennzeichnet, daß man P. anguioides appliziert.

3. Verfahren gemäß Anspruch I, dadurch gekennzeichnet, daß man P. anguioides bzw. P. aestiva in einer Aufwandmenge von $5 \cdot 10^4$ bis $6 \cdot 10^{15}$ kolonienbildene Einheiten pro ha appliziert.

4. Verfahren gemäß Anspruch I oder 2, dadurch gekennzeichnet, daß man Pseudocercosporella anguioides auf Gerste, Weizen oder Roggen appliziert.

5. Mittel zur Bekämpfung der Halmbruchkrankheit bei Getreide, dadurch gekennzeichnet, daß sie den Pilz Pseudocercosporella anguioides oder Pseudocercosporella aestiva in einer wirksamen Menge enthalten.

6. Verwendung von Pseudocercosporella anguioides oder Pseudocercosporella aestiva zu Bekämpfung der Halmbruchkrankheit in Getreide.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | BIOLOGICAL ABSTRACTS, Band 73, Nr. 1, 1982, Seite 84, Zusammenfassung Nr. 819; H NIRENBERG: "Differentiation of Pseudocercosporella strains causing foot rot disease of cereals: 1. Morphology", & Z. PFLANZENKR PFLANZENSCHUTZ 88(5): 241-248 1981 | | A 01 N 63/04 |

-----

**RECHERCHIERTE SACHGEBIETE (Int. Cl.4)**

A.01 N

Der vorliegende Recherchenbericht wurde für alle Patentansprüche erstellt.

| Recherchenort | Abschlußdatum der Recherche | Prüfer |
|---|---|---|
| DEN HAAG | 10-12-1986 | DECORTE D. |